# EUROPÄISCHE PATENTSCHRIFT

(11) **EP 1 533 541 B1**
(45) Veröffentlichungstag und Bekanntmachung des Hinweises auf die Patenterteilung: **11.10.2006**
(21) Anmeldenummer: 04027357.5
(22) Anmeldetag: 18.11.2004
(51) Int. Cl.: F16F 9/512

(54) **Schwingungsdämpfer mit amplitudenabhängiger Dämpfung**
Shock absorber with amplitude-dependent damping
Amortisseur de vibrations avec amortissement dépendant de l'amplitude

(30) Priorität: 20.11.2003 DE 10354333; 01.10.2004 DE 102004047778
(43) Veröffentlichungstag der Anmeldung: 25.05.2005
(73) Patentinhaber: ZF FRIEDRICHSHAFEN AG, 88046 Friedrichshafen (DE)
(72) Erfinder: Burkert, Gunnar, 74211 Leingarten (DE); Förster, Andreas, 97422 Schweinfurt (DE); Gilsdorf, Heinz-Joachim, 97499 Donnersdorf (DE); Gonschorrek, Hans, 97493 Bergrheinfeld (DE); Mackert, Frank, 97493 Bergrheinfeld (DE); Kiefer, Thomas, 97421 Schweinfurt (DE); Sauer, Klaus, 97520 Röthlein (DE)

(56) Entgegenhaltungen:
- EP-A- 1 152 166
- DE-A1- 3 534 298
- GB-A- 2 180 320

## Beschreibung

Die Erfindung betrifft einen Schwingungsdämpfer mit amplitudenabhängiger Dämpfkraft entsprechend dem Oberbegriff von Patentanspruch 1.

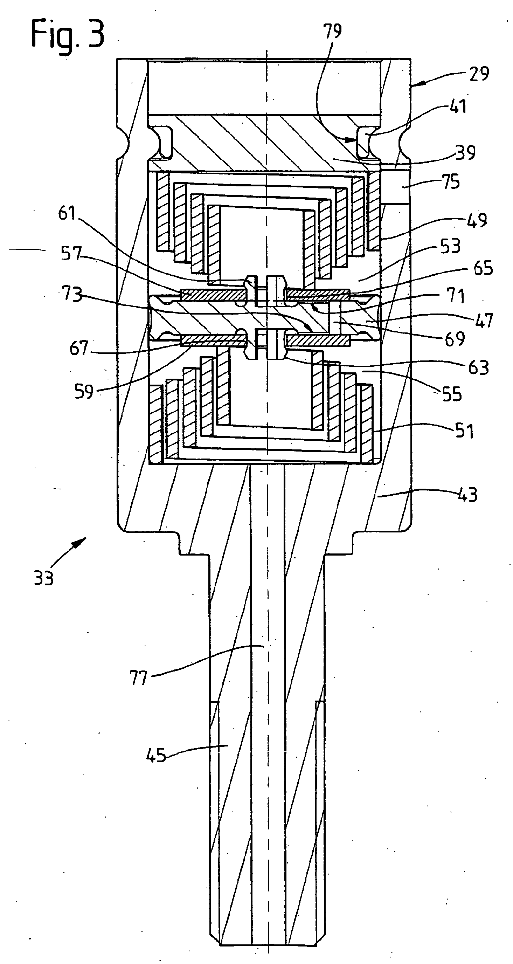

Aus der EP 1 152 166 A1 ist ein Schwingungsdämpfer mit amplitudenabhängiger Dämpfkraft bekannt, gemäß dem Oberbegriff des Anspruchs 1, der ein an der Kolbenstange oberhalb des Kolbens befestigtes Gehäuse aufweist, in dem ein federnd gelagerter Trennkolben angeordnet ist. Das Gehäuse verfügt über radiale Anschlussöffnungen zu einem kolbenstangenseitigen Arbeitsraum und über einen axialen Anschlusskanal durch einen Kolbenstangenzapfen bis zum kolbenstangenfernen Arbeitsraum. Der Vorteil der Anordnung des Gehäuses im kolbenstangenseitigen Arbeitsraum im Vergleich zu einer Befestigung im kolbenstangenfernen Arbeitsraum soll eine kürzere Bauweise erlauben. Insbesondere wenn man die Ausgestaltung nach der Fig. 3 unter dem Gesichtspunkt des axialen Bauraumbedarfs betrachtet, dann stellt sich die angegebene kürzere Baulänge nicht ein, da die Gewindeverbindung einen größeren Außendurchmesser aufweist als die restliche Kolbenstange, so dass die Gehäuselänge weiterhin als Vorlastlänge für den Kolbenstangenweg anzusehen ist.

Aufgabe der vorliegenden Erfindung ist es, einen Schwingungsdämpfer mit amplitudenabhängiger Dämpfkraft zu realisieren, der einen möglichst großen Kolbenstangenhub ermöglicht.

Erfindungsgemäß wird die Aufgabe dadurch gelöst, dass zumindest ein Teil des Gehäuses über eine Reibschweißverbindung mit der Kolbenstange, die hohl ausgeführt ist, verbunden ist und das Gehäuse zumindest auf einem Längenabschnitt den selben Außendurchmesser aufweist, wie die angrenzende Kolbenstange.

Der große Vorteil der Erfindung besteht darin, dass zwischen dem Gehäuse und der Kobenstange keine axiale Überdeckung, z. B. für eine Gewindeverbindung vorliegen muss, so dass eine insgesamt sehr gute Hublänge der Kolbenstange erhalten bleibt.

Die Schweißverbindung lässt sich besonders vorteilhaft mit einem Reibschweißverfahren herstellen. Einerseits ist dieses Schweißverfahren kostengünstig einzusetzen und andererseits entsteht nur auf einem sehr kleinen Bereich eine Erwärmung der Kolbenstange. Des Weiteren entstehen keine Schweißspritzer sondern maximal eine kleine Materialaufwerfung, die sich aber sehr leicht entfernen lässt.

Aufgrund der Durchmesserdimensionierung des Gehäuses könnte die Kolbenstange theoretisch bis zum Anschlag des Kolbens an die Kolbenstangenführung des Schwingungsdämpfers ausfahren, so dass im Vergleich zu einem konventionellen Schwingungsdämpfer überhaupt kein Bauraumnachteil zu verzeichnen wäre.

Des Weiteren ist vorgesehen, dass die Kolbenstange hohl ausgeführt ist. Es besteht damit die Möglichkeit, dass die Kolbenstange selbst einen Volumenanteil der Arbeitskammern des Gehäuses bereitstellt.

Gemäß einem vorteilhaften Unteranspruch ist das Gehäuse von einer axial fixierten Scheibe zu der hohlen Kolbenstange abgetrennt. Wenn dann noch die axial fixierte Scheibe innerhalb des Gehäuses befestigt ist besteht die Möglichkeit, dass das Gehäuse mit den die amplitudenabhängig Dämpfkraft erzeugenden Bauteilen unabhängig von den restlichen Bauteilen des Schwingungsdämpfers auf seine Funktionstüchtigkeit überprüft werden kann.

Zusätzlich besteht die Möglichkeit, dass die Kolbenstange ein rohrförmiges Mittelstück aufweist, dem sich an dem einen Ende das Gehäuse und an dem anderen Ende ein Verschlussstück anschließt. Man kann dann die Funktion hinsichtlich der amplitudenabhängigen Dämpfkraft durch das offene Ende der Kolbenstange überprüfen und die Scheibe des Gehäuses nach bestandener Prüfung fixieren.

Alternativ ist vorgesehen, dass ein rohrförmiges Teil des Gehäuses von der hohlen Kolbenstange gebildet wird und der Boden des Gehäuses angeschweißt ist. Die Kolbenstange muss nicht vollständig hohl ausgeführt sein, sondern kann auch eine Sacklochöffnung für die Arbeitskammern aufweisen.

Der Trennkörper innerhalb des Gehäuses besteht bevorzugt aus Kunststoff und ist mit Versteifungsscheiben versehen. Diese Bauform bietet die Möglichkeit, dass die Arbeitskammern des Gehäuses direkt ohne Verwendung einer separaten Ringdichtung voneinander getrennt werden.

Für eine möglichst einfache Montage des Trennkörpers und einer großen zulässigen Druckbelastung weist der Trennkörper Rastmittel aufweist, die mit der Versteifungsscheibe eine Rastverbindung eingeht.

In Abhängigkeit der Druck- und Temperaturverhältnisse innerhalb des Schwingungsdämpfers kann das Dämpfmedium Luft aufnehmen und wieder abscheiden. Die beim Abscheiden freiwerdenden Gasblasen könnten sich innerhalb des Gehäuses sammeln. Damit dieser Zustand nicht eintritt, weist der Trennkörper eine Entlüftungsöffnung auf.

Aus fertigungstechnischen Gründen weist die Entlüftungsöffnung aus einen axialen Kanal auf, der an Querkanäle anschlossen ist, deren Querschnitte wesentlich kleiner sind als der des axialen Kanals.

So sind die Querkanäle auf der Ober- und Unterseite des Trennkörpers ausgeführt und werden von den Versteifungsscheiben abgedeckt. Die Querkanäle lassen sich bei einem Trennkörper aus Kunststoff sehr leicht maßhaltig anspritzen und werden durch die Versteifungsscheiben abgedeckt.

Anhand der folgenden Figurenbeschreibung soll die Erfindung näher erläutert werden.

Es zeigt:
- Fig. 1: Schwingungsdämpfer im Vollschnitt
- Fig. 2: Ausschnittdarstellung im Bereich des Gehäuses an der Kolbenstange
- Fig. 3 u. 4: Baueinheiten der Kolbenstange mit Gehäuse

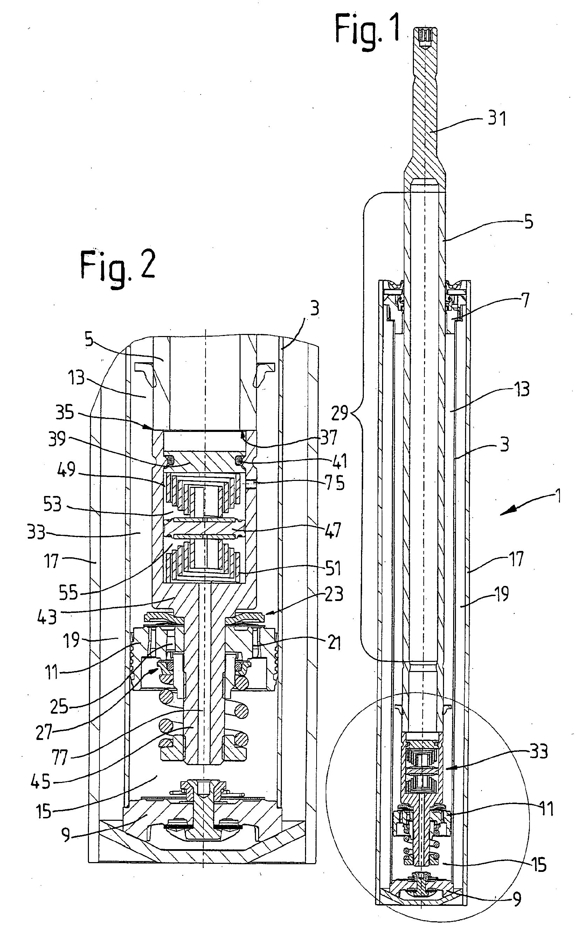

Die Fig. 1 zeigt einen Schwingungsdämpfer 1 in der Bauform eines Federbeins, wobei die Erfindung unabhängig von der Bauform verwendet werden kann. Innerhalb eines Zylinders 3 ist eine Kolbenstange 5 axial beweglich geführt. Eine Kolbenstangenführung 7 an dem einen Ende und ein Bodenventil 9 an dem anderen Ende des Zylinders 3 begrenzen einen vollständig mit Dämpfmedium gefüllten Arbeitsraum, der von einem an der Kolbenstange befestigten Kolben 11 in einen kolbenstangenseitigen und einen kolbenstangenfernen Arbeitsraum 13;15 unterteilt wird. Konzentrisch zum Zylinder ist ein Behälterrohr 17 angeordnet, dass mit der Außenwandung des Zylinders einen nur teilweise mit Dämpfmedium gefüllten ringförmigen Ausgleichsraum 19 für das von der Kolbenstange bei einer Einfahrbewegung verdrängte Volumen im kolbenstangenfernen Arbeitsraum 15 bildet.

Wie aus der Fig. 2 ersichtlich ist, umfasst der Kolben 11 Durchtrittskanäle 21 für ein erstes Dämpfventil 23 bei einer Einfahrbewegung und Durchtrittskanäle für ein zweites Dämpfventil 27 bei einer Ausfahrbewegung des Kolbens 11 bzw. der Kolbenstange 5.

Die Kolbenstange 5 ist hohl ausgeführt und umfasst mehrere Abschnitte. Einem rohrförmigen Mittelstück 29 schließt sich an einem Ende außerhalb des Zylinders ein Verschlussstück 31 an. Das Ende in Richtung des kolbenstangenfernen Arbeitsraums wird von einem Gehäuse 33 gebildet, das über eine Schweißverbindung 35 mit dem offenen Ende der Kolbenstange 5 verbunden ist. Die Schweißverbindung wird bevorzugt nach einem Reibschweißverfahren hergestellt, so dass das abgesehen von der Schweißzone keine nennenswerte Wärmeeinwirkung vorliegt, die die Kolbenstange z. B. verziehen könnte. Das Verschlussstück 31 und das rohrförmige Mittelstück 29 können vor der Herstellung der Schweißverbindung vollständig bearbeitet und auch verchromt sein. Die Stirnfläche 37 für die Schweißverbindung wird beim Verchromen durch geeignete Maßnahmen isoliert, damit keine Einschlüsse die Qualität der Schweißverbindung beeinträchtigen können. Das angeschweißte Gehäuse muss nicht verchromt werden, da dieser Bereich der Kolbenstange nach der Montage ständig im Schwingungsdämpfer verbleibt und im Dämpfmedium gegen Korrosion geschützt ist.

Axial wird das Gehäuse 33 in Richtung der hohlen Kolbenstange 5 von einer axial fixierten Scheibe 39 in Verbindung mit einer Ringdichtung 41 abgetrennt. Am andere Ende bildet ein Boden 43 den Abschluss, der auch einen Zapfen 45 für den Kolben 11 aufweist, so dass das Gehäuse 33 zwischen dem Kolben 11 und dem rohrförmigen Zwischenstück 29 der Kolbenstange 5 angeordnet ist. Das Gehäuse kann zumindest auf einem Längenabschnitt den selben Außendurchmesser aufweisen wie die angrenzende Kolbenstange, so dass im Extremfall der Kolben bis an die Kolbenstangenführung ausfahren könnte.

Innerhalb des Gehäuses 33 ist ein Trennkörper 47 verschiebbar gelagert, der von einer ersten und einer zweiten Federanordnung 49; 51 in einer vorbestimmten Lage gehalten wird und dadurch das Gehäuse 33 in eine erste und eine zweite Arbeitskammer 53; 55 unterteilt. Die beiden Federanordnungen können sich an der axial fixierten Scheibe 39 und am Boden 43 des Gehäuses 33 axial abstützen. In diesem Ausführungsbeispiel wird die Federanordnung von Kegelfedern gebildet, wobei auch andere Ausführungsformen verwendbar sind.

Der Trennkörper 47 besteht bevorzugt aus einem Kunststoff, der auf seiner Ober- und Unterseite mit einer Versteifungsscheibe 57; 59 versehen ist, die für eine gleichmäßige Krafteinleitung der ersten und zweiten Federanordnung 49; 51 sorgen. Am Trennkörper sind Rastmittel 61; 63 in der Bauform von Spreizkörpern ausgeführt, die zusammen mit einer Durchgangsöffnung 65; 67 innerhalb der Versteifungsscheiben für eine Rastverbindung sorgen. (Fig. 3). Des Weiteren weist der Trennkörper mindestens eine Entlüftungsöffnung für das Gehäuse auf, die einen axialen Kanal 69 umfasst und an Querkanäle 71; 73 auf der Ober- und Unterseite des Trennkörper angeschlossen ist, die wiederum von den Versteifungsscheiben abgedeckt werden. Die Querschnitte der Querkanäle 71; 73 sind deutlich kleiner ausgeführt als der axiale Kanal 69, so dass zwar Gas vergleichsweise leicht zwischen den beiden Arbeitskammern 53; 55 strömen kann, jedoch kein nennenswerter Dämpfmediumaustausch stattfindet.

Die erste Arbeitskammer 53 ist über mindestens eine radiale Anschlussöffnung 75 mit dem kolbenstangenseitigen Arbeitsraum 13 und die zweite Arbeitskammer 55 über einen axialen Anschlusskanal 77 mit dem kolbenstangenfernen Arbeitsraum 15 verbunden. (Fig. 2)

Bei einer kleinen Hubbewegung der Kolbenstange, z. B. in Ausfahrrichtung, strömt Dämpfmedium in den Durchtrittskanal 25 für das zweite Dämpfventil 27 ein, dessen Ventilkörper den Durchtrittskanal 25 zumindest bis auf einen sehr kleinen Voröffnungsquerschnitt verschließt. Gleichzeitig wird das in der ersten Arbeitskammer 13 des Gehäuses befindliche Dämpfmedium über die radiale Anschlussöffnung komprimiert und drückt den Trennkolben 47 gegen die Kraft der zweiten Federanordnung 51 in Richtung des Bodens 43 des Gehäuses 33. Dabei wird Dämpfmedium aus der zweiten Arbeitskammer 55 des Gehäuses 33 über den axialen Anschlusskanal 77 in den kolbenstangenfernen Arbeitsraum 15 verdrängt. Ist der Federweg der zweiten Federanordnung 51 ausgenutzt, dann öffnet sich das zweite Dämpfventil 27, so dass die beiden Arbeitsräume 13; 15 miteinander verbunden sind.

Bei einer Einfahrbewegung des Kolbens 11 baut sich innerhalb der zweiten Arbeitskammer 55 über den axialen Anschlusskanal 77 ein Staudruck auf den Trennkörper 47 auf, der eine axiale Verschiebebewegung des Trennkörpers 47 gegen die erste Federanordnung 49 innerhalb der ersten Arbeitskammer 53 bewirkt, wodurch Dämpfmedium aus der ersten Arbeitskammer 53 über die mindestens eine radiale Anschlussöffnung 75 in den kolbenstangenseitigen Arbeitsraum 13 entweichen kann. In Abhängigkeit der Größe der Arbeitskammern 53; 55 und der Federkräfte der Federanordnungen 48; 51 wird eine amplitudenabhängige Dämpfkraft des Schwingungsdämpfers erreicht.

In der Fig. 3 ist erkennbar, dass das Gehäuse 33 eine von der Kolbenstange 5 unabhängige Baueinheit bildet, da die axial fixierte Scheibe 39 innerhalb des Gehäuses 33 befestigt ist. Damit ist die Möglichkeit verbunden, dass man diese Baueinheit mit einem nicht dargestellten Stützstößel für die Scheibe 33 in eine Vorrichtung einspannt und über den axialen Anschlusskanal 77 und die radiale Anschlussöffnung 75 auf seine Funktion überprüft. Befinden sich die gemessenen Drücke oder Kräfte innerhalb der gewünschten Toleranz, dann kann die Scheibe 39 durch axiale Sicken in das Gehäuse fixiert werden. Dazu verfügt die Scheibe über eine umlaufende Nut 79, in der der Dichtring 41 am Nutgrund eingespannt ist. Dieselbe Überprüfung kann auch im Zusammenhang mit einem auf dem Kolbenstangenzapfen montierten Kolben 11 vorgenommen werden, um z. B. Toleranzfehler des Voröffnungsquerschnitts durch eine geänderte Vorspannung der ersten und zweiten Federanordnung 49; 51 kompensieren zu können.

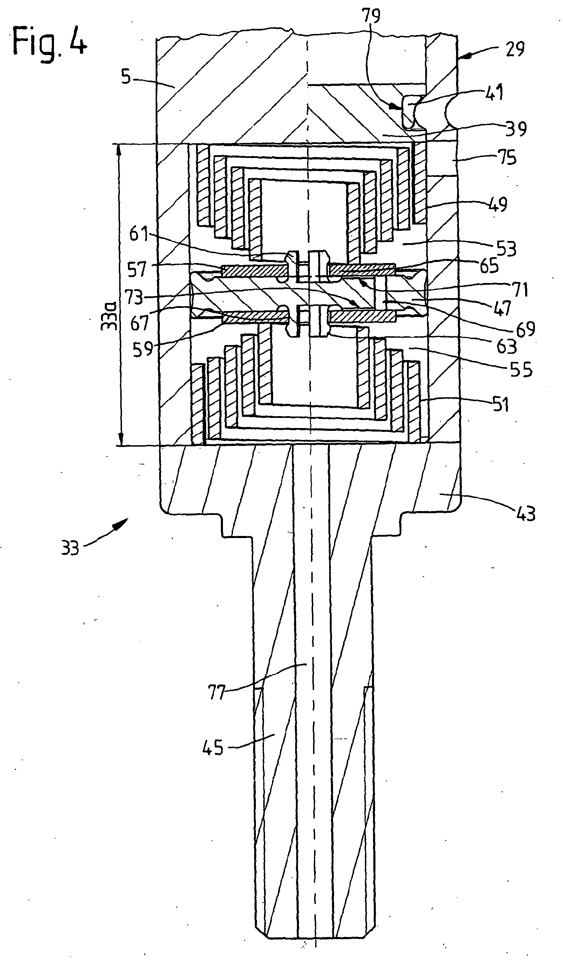

Die Fig. 4 zeigt eine konstruktive Abwandlung des Gehäuses 33 im Vergleich zu der Ausführung nach Fig. 3, wobei die Funktion identisch ist. Der rohrförmige Teil 33a des Gehäuses 33 wird von der hohlen Kolbenstange 5 am Mittelteil 29 gebildet und der Boden 43 des Gehäuses 33 ist angeschweißt. Im linken Halbschnitt der Fig. 4 ist eine Kolbenstange 5 aus einem Vollmaterial dargestellt, wobei endseitig eine Sacklochöffnung für die beiden Arbeitskammern 53; 55 ausgeführt ist. Der rechte Halbschnitt zeigt eine Kolbenstange mit einem rohrförmigen Mittelstück 29 und einem angeschweißten Boden. Auch die Variante nach dem rechten Halbschnitt lässt sich für das Prüfverfahren gemäß Fig. 3 verwenden, da man über das noch offene andere Ende, an dem das Verschlussstück noch nicht befestigt ist, den Stützstößel für die noch zu fixierende Scheibe einführen kann. In Abhängigkeit der Oberflächenqualität der rohrförmigen Kolbenstange 5 kann eine spanende Bearbeitung des Innendurchmessers im Bereich der Arbeitskammern 53; 55 notwendig sein. Soll die Kolbenstange mit der Schweißverbindung bis in den Bereich der Kolbenstangenführung ausfahren, kann eine abschließende Oberflächenbehandlung notwendig sein, damit keine Absätze auf der Kolbenstange vorliegen, die die Kolbenstangenführung beschädigen könnten.

## Patentansprüche

1. Schwingungsdämpfer mit amplitudenabhängiger Dämpfkraft, umfassend einen Zylinder, in dem eine Kolbenstange axial beweglich geführt ist und einen Kolben trägt, der den Zylinder in einen kolbenstangenseitigen und einen kolbenstangenfernen Arbeitsraum unterteilt, wobei die Kolbenstange zumindest einen Teil eines Gehäuse trägt, das in Richtung des kolbenstangenseitigen Arbeitsraums angeordnet ist und innerhalb des Gehäuses ein Trennkörper verschiebbar gelagert ist, der das Gehäuse in eine erste und eine zweite Arbeitskammer unterteilt, wobei die erste Arbeitskammer über mindestens eine radiale Anschlussöffnung mit dem kolbenstangenseitigen Arbeitsraum und die zweite Arbeitskammer über einen Anschlusskanal mit dem kolbenstangenfernen Arbeitsraum verbunden ist,
**dadurch gekennzeichnet,**
**dass** zumindest ein Teil des Gehäuses (33) über eine Reibschweißverbindung (35) mit der Kolbenstange (5), die hohl ausgeführt ist, verbunden ist und das Gehäuse (33) zumindest auf einem Längenabschnitt den selben Außendurchmesser aufweist, wie die angrenzende Kolbenstange (5).

2. Schwingungsdämpfer nach Anspruch 1,
**dadurch gekennzeichnet,**
**dass** das Gehäuse (33) von einer axial fixierten Scheibe (39) zu der hohlen Kolbenstange (5) abgetrennt ist.

3. Schwingungsdämpfer nach Anspruch 2,
**dadurch gekennzeichnet,**
**dass** die axial fixierte Scheibe (39) innerhalb des Gehäuses (33) befestigt ist.

4. Schwingungsdämpfer nach Anspruch 1,
**dadurch gekennzeichnet,**
**dass** die Kolbenstange (5) ein rohrförmiges Mittelstück (29) aufweist, dem sich an dem einen Ende das Gehäuse (33) und an dem anderen Ende ein Verschlussstück (31) anschließt.

5. Schwingungsdämpfer nach Anspruch 1,
**dadurch gekennzeichnet,**
**dass** ein rohrförmiger Teil des Gehäuses (33a) von der hohlen Kolbenstange (5) gebildet wird und der Boden (43) des Gehäuses angeschweißt ist.

6. Schwingungsdämpfer nach Anspruch 1,
**dadurch gekennzeichnet,**
**dass** der Trennkörper (47) innerhalb des Gehäuses (33)aus Kunststoff besteht und mit Versteifungsscheiben (57; 59) versehen ist.

7. Schwingungsdämpfer nach Anspruch 6,
**dadurch gekennzeichnet,**
**dass** der Trennkörper (47) Rastmittel (61; 63) aufweist, die mit der Versteifungsscheibe (57; 59) eine Rastverbindung eingeht.

8. Schwingungsdämpfer nach Anspruch 1,
**dadurch gekennzeichnet,**
**dass** der Trennkörper (47) eine Entlüftungsöffnung aufweist.

9. Schwingungsdämpfer nach Anspruch 8,
**dadurch gekennzeichnet,**
**dass** die Entlüftungsöffnung einen axialen Kanal (69) aufweist, der an Querkanäle (71; 73) anschlossen ist, deren Querschnitte wesentlich kleiner sind als der des axialen Kanals.

10. Schwingungsdämpfer nach Anspruch 9,
**dadurch gekennzeichnet,**
**dass** die Querkanäle (71; 73) auf der Ober- und Unterseite des Trennkörpers (47) ausgeführt sind und von den Versteifungsscheiben (57; 59) abgedeckt werden.

## Claims

1. Shock absorber with amplitude-dependent damping force, comprising a cylinder, in which a piston rod is axially movably guided and carries a piston which subdivides the cylinder into a working chamber on the piston rod side and a working chamber remote from the piston rod, the piston rod carrying at least one part of a housing which is arranged in the direction of the working chamber on the piston rod side and a separating body being displaceably mounted within the housing, which separating body subdivides the housing into a first working chamber and a second working chamber, the first working chamber being connected via at least one radial connecting aperture to the working chamber on the piston rod side and the second working chamber being connected via a connecting channel to the working chamber remote from the piston rod, **characterized in that** at least one part of the housing (33) is connected via a friction weld connection (35) to the piston rod (5), which is of hollow configuration, and the housing (33) has the same outside diameter as the adjacent piston rod (5), at least on one longitudinal portion.

2. Shock absorber according to Claim 1, **characterized in that** the housing (33) is separated from an axially fixed disc (39) on the hollow piston rod (5).

3. Shock absorber according to Claim 2, **characterized in that** the axially fixed disc (39) is fastened inside the housing (33).

4. Shock absorber according to Claim 1, **characterized in that** the piston rod (5) has a tubular centre piece (29) to which the housing (33) is attached at one end and to which a sealing piece (31) is attached at the other end.

5. Shock absorber according to Claim 1, **characterized in that** a tubular part of the housing (33a) is formed by the hollow piston rod (5) and the base (43) of the housing is welded on.

6. Shock absorber according to Claim 1, **characterized in that** the separating body (47) inside the housing (33) consists of plastic and is provided with stiffening discs (57; 59).

7. Shock absorber according to Claim 6, **characterized in that** the separating body (47) has latching means (61; 63) which enter into a latching connection with the stiffening disc (57; 59).

8. Shock absorber according to Claim 1, **characterized in that** the separating body (47) has a vent opening.

9. Shock absorber according to Claim 8, **characterized in that** the vent opening has an axial channel (69) which is connected to transverse channels (71; 73), of which the cross sections are substantially smaller than that of the axial channel.

10. Shock absorber according to Claim 9, **characterized in that** the transverse channels (71; 73) are configured on the upper and lower face of the separating body (47) and are covered by the stiffening discs (57; 59).

## Revendications

1. Amortisseur de vibrations dont la force d'amortissement dépend de l'amplitude, qui comprend un cylindre dans lequel une tige de piston est guidée à déplacement axial et porte un piston qui divise le cylindre en un espace de travail situé du côté de la tige de piston et un espace de travail distant de la tige de piston, la tige de piston portant au moins une partie d'un boîtier disposé dans la direction de l'espace de travail situé du côté de la tige de piston, un corps de séparation étant monté à coulissement à l'intérieur du boîtier et divisant le boîtier en une première et une deuxième chambre de travail, la première chambre de travail étant reliée par au moins une ouverture radiale de raccordement à l'espace de travail situé du côté de la tige du piston, la deuxième chambre de travail étant reliée par un canal de raccordement à l'espace de travail situé à distance de la tige du piston,
**caractérisé en ce qu'**au moins une partie du boîtier (33) est reliée par une liaison (35) soudée par frottement à la tige de piston (5) creuse, le boîtier (33) présentant au moins sur une partie de sa longueur le même diamètre extérieur que la tige de piston (5) adjacente.

2. Amortisseur de vibrations selon la revendication 1, **caractérisé en ce que** le boîtier (33) est séparé de la tige de piston creuse (5) par une plaque (39) immobilisée axialement.

3. Amortisseur de vibrations selon la revendication 2, **caractérisé en ce que** la plaque (39) immobilisée axialement est fixée à l'intérieur du boîtier (33).

4. Amortisseur de vibrations selon la revendication 1, **caractérisé en ce que** la tige de piston (5) présente une pièce centrale (29) de forme tubulaire à une extrémité de laquelle se raccorde le boîtier (33) et à l'autre extrémité de laquelle se raccorde une pièce de fermeture (31).

5. Amortisseur de vibrations selon la revendication 1, **caractérisé en ce qu'**une partie tubulaire du boîtier (33a) est formée par la tige de piston creuse (5) et **en ce que** le fond (43) du boîtier est soudé.

6. Amortisseur de vibrations selon la revendication 1, **caractérisé en ce que** le corps de séparation (47) qui tient l'intérieur du boîtier (33) est réalisé en matière synthétique et est doté de plaques de renfort (57; 59).

7. Amortisseur de vibrations selon la revendication 6, **caractérisé en ce que** le corps de séparation (47) présente des moyens d'encliquetage (61; 63) qui forment une liaison encliquetée avec la plaque de renfort (57; 59).

8. Amortisseur de vibrations selon la revendication 1, **caractérisé en ce que** le corps de séparation (47) présente une ouverture d'évent.

9. Amortisseur de vibrations selon la revendication 8, **caractérisé en ce que** l'ouverture d'évent présente un canal axial (69) qui est raccordé à des canaux transversaux (71; 73) dont la section transversale est beaucoup plus petite que celle du canal axial.

10. Amortisseur de vibrations selon la revendication 9, **caractérisé en ce que** les canaux transversaux (71; 73) sont réalisés sur le côté supérieur et le côté inférieur du corps de séparation (47) et sont recouverts par les plaques de renfort (57; 59).
